# EUROPÄISCHE PATENTSCHRIFT

(11) **EP 2 514 617 B1**
(45) Veröffentlichungstag und Bekanntmachung des Hinweises auf die Patenterteilung: **14.06.2017**
(21) Anmeldenummer: 12164980.0
(22) Anmeldetag: 20.04.2012
(51) Int. Cl.: B60H 1/00, B60H 3/06, B60H 1/32

(54) **Kraftfahrzeugklimaanlage**
Motor vehicle air conditioning
Climatisation de véhicule automobile

(30) Priorität: 20.04.2011 DE 102011007754
(43) Veröffentlichungstag der Anmeldung: 24.10.2012
(73) Patentinhaber: MAHLE Behr GmbH & Co. KG, 70469 Stuttgart (DE)
(72) Erfinder: Heilemann, Jürgen, 73240 Wendlingen (DE); Komowski, Michael, 71263 Weil der Stadt (DE); Wolf, Walter, 71570 Oppenweiler-Zell (DE); Klein, Florian, 75378 Bad Liebenzell (DE)
(74) Vertreter: Grauel, Andreas

(56) Entgegenhaltungen:
- EP-A1- 1 502 642
- EP-A2- 2 062 761
- DE-A1- 10 131 383

## Beschreibung

Die vorliegende Erfindung betrifft eine Kraftfahrzeugklimaanlage gemäß dem Oberbegriff des Anspruches 1.

Kraftfahrzeugklimaanlagen werden in Kraftfahrzeugen eingesetzt, um die einem Innenraum des Kraftfahrzeuges zuzuführende Luft zu erwärmen und/oder zu kühlen. Hierzu weist die Kraftfahrzeugklimaanlage ein Gehäuse auf und innerhalb des Gehäuses sind aus dem Gehäuse aus Kunststoff Luftkanäle begrenzt. Mittels eines Gebläses wird die Luft aus der Umgebung oder dem Innenraum des Kraftfahrzeuges angesaugt und mit einem Kältemittelverdampfer optional gekühlt und mit einer Heizeinrichtung optional erwärmt. Ein Luftfilter dient zum Filtern der Luft. Beim Ansaugen der Luft aus der Umgebung kann diese auch mit Wasser, z. B. in Form von Wassertropfen oder von Schnee, versetzt sein. Hierzu ist die Kraftfahrzeugklimaanlage mit einem Wasserabscheider versehen, damit möglichst wenig Wasser beim Ansaugen mit dem Gebläse zu dem Luftfilter gelangt. In zunehmendem Ausmaße aufgrund konstruktiver Anforderungen, insbesondere aufgrund eines immer geringer werdenden zur Verfügung stehenden Bauraumes, erfolgt eine Wasserabscheidung mit einer geringeren Effektivität. Dadurch gelangt in größerem Ausmaß Wasser zu dem Luftfilter, welches sich an diesem ansammelt. Aus diesem Grund ist es erforderlich, das sich am Luftfilter ansammelnde Wasser in einer Wanne an einem Filterdeckel zu sammeln und abzuleiten. Mittels des lösbar mit dem Gehäuse der Kraftfahrzeugklimaanlage verbundenen Filterdeckels kann auch der Luftfilter bei einem Entfernen des Filterdeckels von dem Gehäuse für Wartungszwecke ausgetauscht werden.

Die DE 10 2009 009 065 A1 zeigt eine Klimaanlage, insbesondere für ein Kraftfahrzeug, bei welcher eine Vielzahl von Funktionseinheiten in einem Luftströmungspfad angeordnet sind, wobei die Funktionseinheiten zumindest teilweise von jeweiligen Gehäusen umgeben sind, wobei die Vielzahl von Funktionseinheiten zumindest ein Gebläse, einen Filter und einen Verdampfer umfassen, wobei zumindest ein erstes Gehäuse der jeweiligen Gehäuse mit einem Verbindungselement zum Ableiten von Kondenswasser und zum direkten dichten Verbinden des ersten Gehäuses über das Verbindungselement mit einem zweiten Gehäuse der jeweiligen Gehäuse versehen ist.

Aus der DE 10 2008 007 915 A1 ist eine Deckel-Gehäuse-Anordnung mit einem Gehäuse sowie einem am Gehäuse angebrachten Deckel bekannt, bei der aus dem Inneren des Gehäuses über den Deckel ein Medium abführbar ist und der Deckel gegenüber dem Gehäuse in einem Dichtungsbereich abgedichtet ist, wobei der Dichtungsbereich räumlich getrennt vom Übertrittsbereich des Mediums vom Gehäuse in dem Deckel angeordnet ist.

Die EP 1 502 642 A1 offenbart eine Filteranordnung, die eine Schmutzwanne zum Auffangen und einfachen Entsorgen von vom Filterelement ausgefiltertem Schmutz aufweist, und die schubladenartig von der Seite in das Luftführungsgehäuse einführbar ist.

Die Aufgabe der vorliegenden Erfindung besteht deshalb darin, eine Kraftfahrzeugklimaanlage zur Verfügung zu stellen, bei der eine konstruktiv einfache Verbindung eines Filterdeckels mit einem Gehäuse der Kraftfahrzeugklimaanlage bei guter Handhabung möglich ist.

Diese Aufgabe wird mit den Merkmalen von Anspruch 1 gelöst.

Ein Ausführungsbeispiel der Erfindung betrifft eine Kraftfahrzeugklimaanlage, umfassend ein Gehäuse, wenigstens einen Luftkanal zum Durchleiten von Luft, ein Gebläse, einen Luftfilter, einen Filterdeckel mit einer Wanne zum Sammeln von Wasser an dem Luftfilter und vorzugsweise einer Einrichtung zum Ableiten des Wassers aus der Wanne, eine Nut-Feder-Verbindung zum lösbaren Verbinden des Filterdeckels mit dem Gehäuse, wobei der Filterdeckel aufgrund der Geometrie der Nut-Feder-Verbindung mittels einer, insbesondere ausschließlich, im Wesentlichen horizontalen translatorischen Bewegung des Filterdeckels mit dem Gehäuse verbindbar und lösbar ist. In vorteilhafter Weise kann somit mit einer im Wesentlichen horizontalen translatorischen Bewegung, d.h. einer horizontalen Translationsbewegung, der Filterdeckel mit dem Gehäuse der Kraftfahrzeuge verbunden und auch wieder gelöst werden. Eine im Wesentlichen horizontale Bewegung bzw. Translationsbewegung ist dabei eine Bewegung bzw. Translationsbewegung mit einer Abweichung von weniger als 30°, 20°, 10° oder 5° zu einer horizontalen Achse oder Ebene. Bei der Wartung der Kraftfahrzeugklimaanlage ist es somit möglich, den Filterdeckel besonders einfach mittels der Nut-Feder-Verbindung mit dem Gehäuse zu verbinden und diese Verbindung auch wieder zu lösen.

In einer ergänzenden Ausgestaltung ist der Filterdeckel mit einer Schwenkbewegung mit dem Gehäuse verbindbar und lösbar. Hierzu weist z.B. der Filterdeckel an einer Anschlagseite eine Feder für eine Nut-Feder-Verbindung auf und an einer gegenüberliegenden weiteren Anschlagseite eine Rast- oder Clipsverbindung auf. Beim Verbinden des Filterdeckels mit dem Gehäuse wird zuerst die Feder in die Nut der Nut-Feder-Verbindung an der Anschlagseite eingeschoben, anschließend der Filterdeckel verschwenkt, so dass an den anderen, senkrecht zu der Anschlagseite ausgerichteten Seiten eine Feder in die Nut der Nut-Feder-Verbindung an den anderen Seiten eingeschoben wird und anschließend wird mit der Rast- oder Clipsverbindung an der weiteren Anschlagseite der Filterdeckel mit dem Gehäuse verbunden.

Zweckmäßig umfasst die Kraftfahrzeugklimaanlage eine Fixierungseinrichtung, z. B. ein Bajonettverschluss, eine Rastverbindung oder eine Schraubverbindung, mittels der der Filterdeckel mit dem Gehäuse lösbar verbindbar ist. Nach dem horizontalen Einschieben des Filterdeckels bis zu einem Anschlag kann somit in dieser Stellung des Filterdeckels mittels der Fixierungseinrichtung der Filterdeckel lösbar an dem Gehäuse der Kraftfahrzeugklimaanlage fixiert werden.

Gemäß der Erfindung ist die Nut-Feder-Verbindung an einer Anschlagseite, vorzugsweise an zwei gegenüberliegenden Anschlagseiten, des Filterdeckels im Wesentlichen in horizontaler Translationsrichtung ausgerichtet, so dass die im Wesentlichen horizontal translatorisch ausgerichtete Nut-Feder-Verbindung als Anschlag bei der im Wesentlichen horizontalen Translationsbewegung des Filterdeckels zum Verbinden mit dem Gehäuse dient. Im Wesentlichen horizontal ausgerichtete bedeutet dabei, dass die Nut-Feder-Verbindung mit einer Abweichung von weniger als 30°, 20°, 10° oder 5° zu einer horizontalen Ebene oder Achse ausgerichtet ist. Die A-Seite bzw. die A-Nut-Feder-Verbindung dient somit als Anschlag beim Einschieben des Filterdeckels an dem Gehäuse.

In einer weiteren erfindungsgemäßen Ausgestaltung dient die Nut-Feder-Verbindung an einer Führungsseite, vorzugsweise an zwei gegenüberliegenden Führungsseiten, als Führungsschiene zur Führung des Filterdeckels bei der Bewegung des Filterdeckels zum Verbinden und Lösen mit dem Gehäuse. Die Nut-Feder-Verbindung an der Führungsseite bzw. die Führungs-Nut-Feder-Verbindung dient somit zur Führung des Filterdeckels bei der Bewegung des Filterdeckels zum Verbinden und Lösen mit dem Gehäuse.

In einer ergänzenden Ausführungsform ist die Nut-Feder-Verbindung an der einen Führungsseite, vorzugsweise an zwei Führungsseiten, im Wesentlichen vertikal ausgerichtet. Im Wesentlichen vertikal ausgerichtet bedeutet dabei, dass die Nut-Feder-Verbindung mit einer Abweichung von weniger als 30°, 20°, 10° oder 5° zu einer vertikalen Ebene oder Gerade ausgerichtet ist.

Vorzugsweise ist eine Längsachse der Nut und/oder der Feder der Nut-Feder-Verbindung an der einen Führungsseite, vorzugsweise an zwei Führungsseiten, im Wesentlichen parallel zu einer Bewegungsrichtung der horizontalen Bewegung zum Verbinden und Lösen des Filterdeckels mit dem Gehäuse ausgerichtet.

In einer Variante liegt der Luftfilter auf wenigstens einer Rippe auf und die Rippe ist an dem Filterdeckel ausgebildet und vorzugsweise ist die wenigstens eine Rippe im Wesentlichen senkrecht zu einer Strömungsrichtung der durch den Luftfilter geleiteten Luft ausgerichtet, so dass die wenigstens eine Rippe als Luftdichtung und/oder Labyrinthdichtung zur Vermeidung einer Umströmung des Luftfilters mit Luft fungiert. Die wenigstens eine Rippe ist vorzugsweise einteilig an dem Filterdeckel aus Kunststoff ausgebildet, d. h. beim Spritzgießen des Filterdeckels aus Kunststoff kann die wenigstens eine Rippe, vorzugsweise mehrere Rippen, einfach beim Spritzgießen des Filterdeckels kostengünstig hergestellt werden. Die wenigstens eine Rippe verhindert oder vermeidet eine Umströmung des Luftfilters, so dass die gesamte in den Innenraum des Kraftfahrzeuges geleitete Luft durch den Luftfilter geleitet ist. Vorzugsweise ist dabei die Rippe vollständig in einer Richtung senkrecht zu einer Strömungsrichtung der Luft durch den Luftfilter ausgebildet, so dass eine Umströmung der wenigstens einen Rippe nicht möglich ist und der Luftfilter auf der wenigstens einen Rippe vollständig aufliegt. Vorzugsweise ist die Breite der wenigstens einen Rippe zwischen dem 0,1- und 0,9-Fachen, insbesondere zwischen dem 0,7- und 0,9-Fachen, der Breite oder Länge des Luftfilters.

Zweckmäßig weist die Kraftfahrzeugklimaanlage einen Ableitungskanal zur Ableitung von Wasser in einem zu dem Luftfilter führenden Luftkanal auf. Zu dem Luftfilter wird die Luft durch einen Luftkanal geführt. In diesem Luftkanal, welcher zu dem Luftfilter führt, kann sich Wasser ansammeln, welches durch feuchte Luft als Wassertropfen mitgeführt oder aus Schneepartikeln entstehen kann. Damit dieses Wasser nicht in den Luftfilter gelangt, wird das Wasser mit Hilfe eines Ableitungskanales abgeleitet. Der Ableitungskanal ist vorzugsweise in Strömungsrichtung der durch den Luftfilter geleiteten Luft vor dem Luftfilter ausgebildet. Beispielsweise sind hierzu am Gehäuse der Kraftfahrzeugklimaanlage oder auch am Filterdeckel, je nach der Ausbildung des Ableitungskanales, Ableitungsöffnungen ausgebildet, in welche das Wasser einströmen kann. Mittels einer Wasserleiste im Bereich des Luftfilters, insbesondere unmittelbar an dem Luftfilter als Barriere wird verhindert, dass das Wasser in dem Luftkanal, welcher zu dem Luftfilter führt, an den Luftfilter gelangen kann und dadurch vollständig in die Ableitungsöffnungen, welche zu dem Ableitungskanal führen, geleitet wird.

In einer weiteren Ausführungsform ist der Ableitungskanal an dem Gehäuse der Kraftfahrzeugklimaanlage oder an dem Filterdeckel ausgebildet und vorzugsweise mündet der Ableitungskanal bei einer Ausbildung an dem Filterdeckel in die Einrichtung zum Ableiten des Wassers aus der Wanne.

Insbesondere umfasst der Filterdeckel einen Autodockingstutzen zum Ableiten des Wassers aus der Wanne und der Autodockingstutzen ist an einem Dockingendabschnitt im Wesentlichen parallel zu der Bewegungsrichtung des Filterdeckels zum Verbinden und Lösen mit dem Gehäuse ausgerichtet, so dass durch eine komplementär ausgebildeten Gegenöffnung an dem Gehäuse beim Bewegen des Filterdeckels selbständig eine fluidleitende Verbindung von dem Autodockingstutzen zu der Gegenöffnung an dem Gehäuse herstellbar und aufhebbar ist.

In einer weiteren Ausgestaltung ist die Breite der Öffnung an dem Gehäuse für den Luftfilter kleiner, vorzugsweise wenigstens um das 0,9-, 0,8- oder 0,7-Fache kleiner, als die Breite des Filterdeckels. An dem Gehäuse sind Stege mit Tropfnasen ausgebildet, welche in einem Abstand zu einer Nut-Feder-Verbindung ausgebildet sind, so dass die Breite der Öffnung an dem Gehäuse kleiner ist als die Breite des Filterdeckels.

Vorzugsweise ist am Rand des Filterdeckels und/oder am Gehäuse, insbesondere im Bereich der Nut-Federverbindung, ein Kanal zum Leiten des Wassers von dem Ableitungskanal zu der Ablauföffnung ausgebildet.

In einer weiteren Ausgestaltung weist der Filterdeckel keine Ableitung von sich an dem Luftfilter sammelnden Wasser auf. Das sich am Luftfilter sammelnde Wasser muss somit verdunsten und wird von der durch den Luftfilter geleiteten Luft mitgenommen.

In einer ergänzenden Ausführungsform ist die Ableitungsöffnung an der Bodenwandung des Filterdeckels, insbesondere im Wesentlichen mittig an der Bodenwandung, ausgebildet. Die Rippen sind dabei vorzugsweise wenigstens teilweise, insbesondere vollständig, nicht parallel, sondern in einem spitzen Winkel zueinander ausgerichtet, so dass das zwischen den Rippen auf der Bodenwandung zu der Ableitungsöffnung abfließende Wasser zu der Ableitungsöffnung ableitbar ist. Die Rippen sind vorzugsweise wenigstens teilweise, insbesondere vollständig, im Wesentlichen in Fließrichtung des Wassers zu der Ableitungsöffnung ausgerichtet. Vorzugsweise weist die Bodenwandung ein Gefälle zu der Ableitungsöffnung auf.

In einer weiteren Ausgestaltung umfasst die Kraftfahrzeugklimaanlage ein Gebläse und/oder eine Heizeinrichtung und/oder einen Kältemittelverdampfer und/oder einen Kondenswasserablauf zum Ableiten von Kondenswasser an dem Kältemittelverdampfer und/oder die Einrichtung zum Ableiten des Wassers aus der Wanne mündet in den Kondenswasserablauf an dem Kältemittelverdampfer.

Zweckmäßig besteht das Gehäuse der Kraftfahrzeugklimaanlage und/oder der Filterdeckel wenigstens teilweise, insbesondere vollständig, aus Kunststoff.

Im Nachfolgenden werden Ausführungsbeispiele der Erfindung unter Bezugnahme auf die beigefügten Zeichnungen näher beschrieben. Es zeigt:
- Fig. 1: eine perspektivische Ansicht eines Filterdeckels in einem ersten Ausführungsbeispiel,
- Fig. 2: einen Schnitt parallel zu einer Bewegungsrichtung des Filterdeckels in einem zweiten Ausführungsbeispiel
- Fig. 3: einen Schnitt senkrecht zu einer Bewegungsrichtung des Filterdeckels in dem zweiten Ausführungsbeispiel und
- Fig. 4: einen Schnitt eines Autodockingstutzens und einer Gegenöffnung an dem Gehäuse.

Eine nicht dargestellte Kraftfahrzeugklimaanlage für ein Kraftfahrzeug weist ein Gehäuse 1 aus Kunststoff auf. Innerhalb des Gehäuses 1 ist ein Gebläse, ein Luftfilter 2, ein Kältemittelverdampfer zum Kühlen der Luft und eine Heizeinrichtung zum Erwärmen der Luft angeordnet. Das Gehäuse 1 begrenzt dabei Luftkanäle zum Durchleiten der Luft. Mittels einer nicht dargestellten Umluftklappe wird gesteuert, ob von dem Gebläse Luft aus der Umgebung des Kraftfahrzeuges oder aus dem Innenraum des Kraftfahrzeuges angesaugt wird. Ein Wasserabscheider dient dazu, die angesaugte Luft, insbesondere die aus der Umgebung des Kraftfahrzeuges angesaugte Luft, in Luft und Wasser zu trennen. Trotz der Wasserabscheidung kann es jedoch vorkommen, dass auch zu dem Luftfilter 2 Wasser gelangt. Aus diesem Grund ist es erforderlich, dass das an dem Luftfilter 2 angesammelte Wasser aufgefangen und abgeleitet wird.

Unterhalb des Luftfilters 2 ist ein Filterdeckel 3 mit dem Gehäuse 1 der Kraftfahrzeugklimaanlage lösbar verbunden. Der Filterdeckel 3 kann von dem Gehäuse 1 entfernt werden, um bei einer Wartung der Kraftfahrzeugklimaanlage den Luftfilter 2 auszuwechseln. Hierzu ist der Filterdeckel 3 vertikal unterhalb des Luftfilters 2 mit dem Gehäuse 1 verbunden.

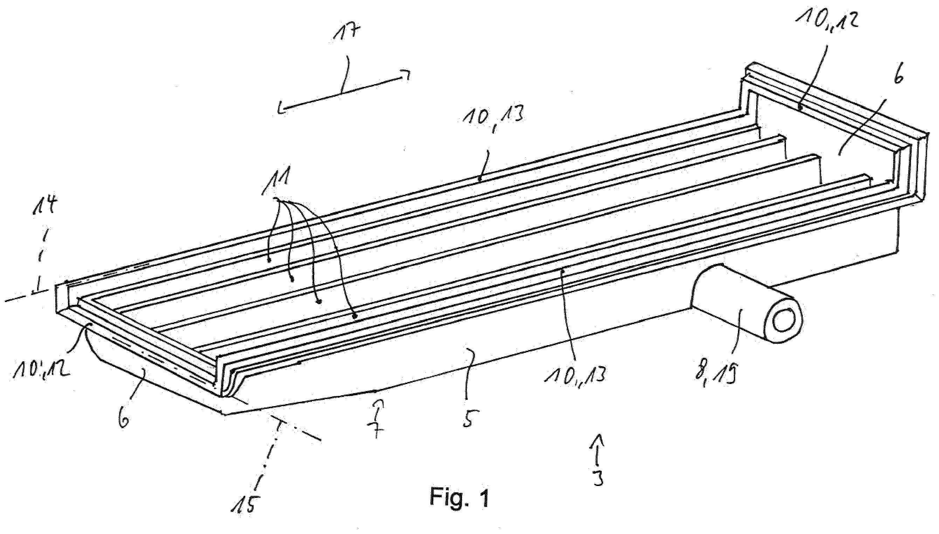

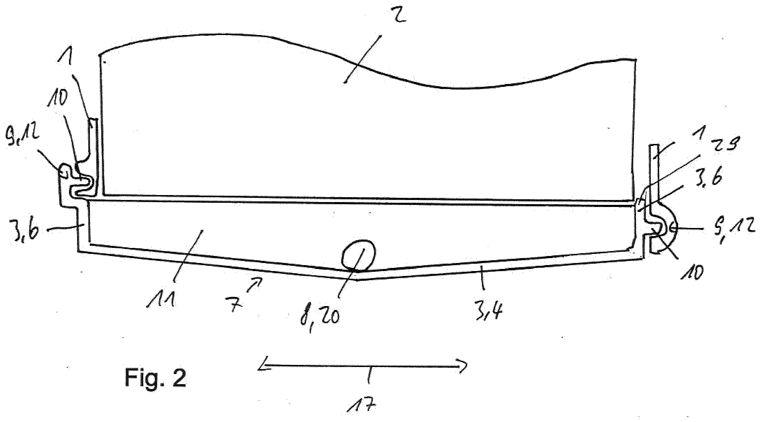

In Fig. 2 ist ein erstes Ausführungsbeispiel des Filterdeckels 3 dargestellt. Der Filterdeckel 3 weist eine Bodenwandung 4, zwei Längsseitenwandungen 5 und zwei Breitseitenwandungen 6 auf, so dass sich an dem Filterdeckel 3 aus Kunststoff eine Wanne 7 zum Sammeln von Wasser bildet. Der Luftfilter 2 (nicht in Fig. 1 dargestellt) liegt dabei auf Rippen 11 auf. Die Rippen 11 sind dabei senkrecht zu einer Bewegungsrichtung der Luft durch den Luftfilter 2 ausgebildet und dienen dazu, eine Umströmung des Luftfilters 2 zu verhindern und bilden eine Auflage für den Luftfilter 2. An einer Längsseitenwandung 5 ist ein Ableitungsstutzen 19 ausgebildet und durch den Ableitungsstutzen 19 als Einrichtung 8 zum Ableiten von Wasser aus der Wanne 7 kann das in der Wanne 7 abgeleitete Wasser abgeleitet werden. Hierzu ist an den Ableitungsstutzen 19 ein nicht dargestellter Schlauch anzuschließen. Am oberen Endbereich der beiden Längsseitenwandungen 5 und der beiden Breitseitenwandungen 6 ist voll umlaufend eine Feder 10 einer Nut-Feder-Verbindung 9 ausgebildet.

Zur Verbindung des Filterdeckels 3 mit dem Gehäuse 1 ist hierzu am Gehäuse 1 eine entsprechend komplementär ausgebildete Nut (nicht dargestellt) zur Einführung der Feder 10 an dem Filterdeckel 3 in die Nut an dem Gehäuse 1 vorhanden. Im oberen Endbereich der beiden Breitseitenwandungen 6 ist jeweils eine A-Seite 12 als Anschlagseite 12 des Filterdeckels 3 vorhanden und an den beiden Längsseitenwandungen 5 jeweils eine F-Seite 13 als Führungsseite 13 vorhanden. Die Feder 10 bzw. die Nut-Feder-Verbindung 9 an den beiden A-Seiten 12 bilden dabei einen Anschlag bei der Bewegung des Filterdeckels zur Verbindung und Lösung mit dem Gehäuse 1, d. h. die Nut-Feder-Verbindung 9 an den beiden Breitseitenwandungen 6 bzw. den beiden A-Seiten 12 stellen eine Anschlag-Nut-Feder-Verbindung 9 dar. Die Federn 10 bzw. Nut-Feder-Verbindungen 9 an den beiden Längsseitenwandungen 5 bzw. an den F-Seiten 13 bilden eine Führungsseite 13 bzw. eine Führungs-Nut-Feder-Verbindung 9. Bei einer horizontalen Bewegung des Filterdeckels 3 zur Verbindung mit dem Gehäuse 1 oder zum Lösen der Verbindung mit dem Gehäuse 1 dienen die Nut-Feder-Verbindungen 9 an den beiden F-Seiten 13 als Führungsschiene zur Führung des Filterdeckels 3. Die im Wesentlichen horizontale Bewegungsrichtung 17 des Filterdeckels 3 zur Verbindung und Lösung mit dem Gehäuse 1 ist in Fig. 1 als Pfeil dargestellt. Eine Längsachse 14 der F-Seite 13 bzw. der Nut-Feder-Verbindung 9 bzw. der Feder 10 an den F-Seiten 13 ist im Wesentlichen parallel zu der Bewegungsrichtung 17. Die eine Längsachse 15 der Nut-Feder-Verbindung 9 bzw. der Feder 10 an den beiden A-Seiten 12 ist senkrecht zu der Bewegungsrichtung 17, da die Nut-Feder-Verbindung 9 an den beiden A-Seiten 12 einen Anschlag bildet.

Zum Verbinden des Filterdeckels 3 mit dem Gehäuse 1, z. B. bei einer Wartung der Kraftfahrzeugklimaanlage und einem erforderlichen Wechsel des Luftfilters 2, sind zunächst die beiden Federn 10 an den F-Seiten 13 bzw. den beiden Längsseitenwandungen 5 in entsprechend komplementär ausgebildete Nuten an dem Gehäuse 1 einzuführen und dadurch erfolgt eine Führung der Bewegung des Filterdeckels 3 relativ zu dem Gehäuse 1. Die Filter 10 sind dabei solange in die Nuten an dem Gehäuse 1 einzuschieben, bis die Federn 10 an den A-Seiten 12 bzw. den beiden Breitseitenwandungen 6 einen Anschlag bilden, d. h. die Federn 10 in entsprechend komplementär ausgebildeten Nuten an dem Gehäuse 1 vollständig eingeführt sind. In dieser Stellung des Filterdeckels 3 an dem Gehäuse 1 ist somit der Filterdeckel 3 mit dem Gehäuse 1 formschlüssig aufgrund der Nut-Feder-Verbindungen 9 verbunden und damit der Filterdeckel 3 sich nicht von dem Gehäuse 1 löst, kann mittels eines nicht dargestellten Bajonettverschlusses als Fixierungseinrichtung eine Bewegung des Filterdeckels 3 relativ zu dem Gehäuse 1 verhindert werden. Zum Lösen bzw. Entfernen des Filterdeckels 3 ist somit in umgekehrter Weise zunächst der Bajonettverschluss zu lösen und anschließend der Filterdeckel 3 in einer horizontalen Bewegungsrichtung 17 von dem Gehäuse 1 zu entfernen, d. h. die Federn 10 an den F-Seiten 13 werden aus den entsprechenden Nuten an dem Gehäuse 1 herausgeschoben.

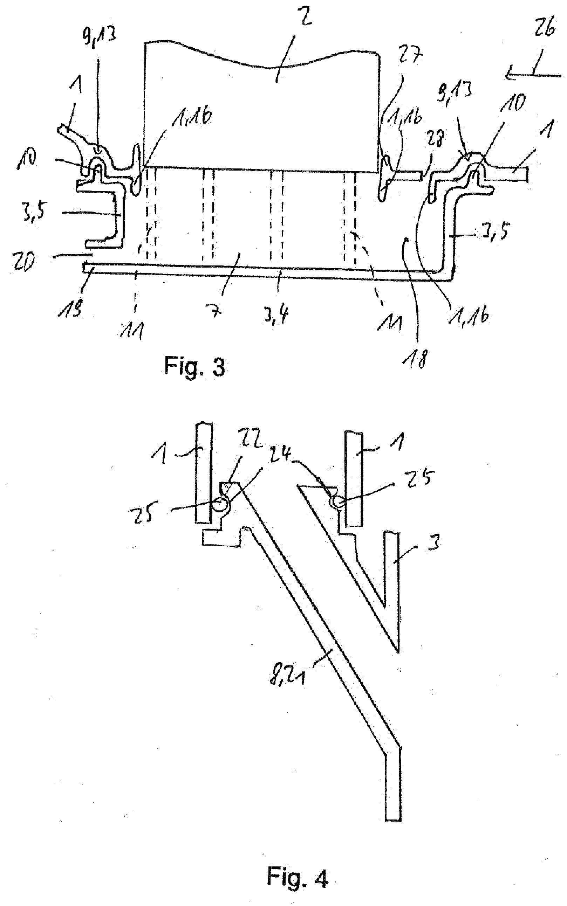

In Fig. 2 und 3 ist ein zweites Ausführungsbeispiel des Federdeckels 3 dargestellt. Im Nachfolgenden werden im Wesentlichen nur die Unterschiede zu dem ersten Ausführungsbeispiel gemäß Fig. 1 beschrieben. Die durch den Luftfilter 2 geleitete Luft 26 wird in einer Strömungsrichtung von rechts nach links gemäß der Darstellung in Fig. 3 parallel zu der Zeichenebene von Fig. 3 durch den Luftfilter 2 geleitet. Die zu dem Luftfilter 2 geleitete Luft 26 wird durch einen nur teilweise dargestellten Luftkanal zu dem Luftfilter 2 geleitet. In diesen Luftkanal zur Zuführung von Luft für den Luftfilter 2 kann sich Wasser ansammeln. Aus diesem Grund weist der Filterdeckel 3 einen Ableitungskanal 18 auf, in welchen das sich in dem Luftkanal ansammelnde Wasser in die Wanne 7 des Filterdeckels 3 eingeleitet werden kann. Zwischen dem Luftfilter 2 und der in Fig. 3 rechts dargestellten Nut-Feder-Verbindung 9 überragt das Gehäuse 1 oder überdeckt das Gehäuse 1 die Wanne 7 und in diesem Teil des Gehäuses 1 sind Ableitungsöffnungen 28 vorhanden. Senkrecht zu der Zeichenebene von Fig. 3 sind somit an diesem Abschnitt des Gehäuses 1 Ableitungsöffnungen 28 vorhanden. Damit das sich im Luftkanal ansammelnde Wasser nicht zu dem Luftfilter 2 gelangt und vollständig durch die Ableitungsöffnungen 28 in die Wanne 7 eingeleitet wird, weist das Gehäuse 1 eine Wasserleiste 27 auf, welche als Barriere dient, so dass das Wasser vollständig durch die Ableitungsöffnungen 28 in die Wanne 7 gelangt. Die Strömungsrichtung der Luft 26 ist in Fig. 3 ebenfalls durch einen Pfeil dargestellt. Eine in dem Filterdeckel 3 ausgebildete Ableitungsöffnung 20 dient dazu, dass sich das in der Wanne 7 sammelnde Wasser durch die Ableitungsöffnung 20 ausgeleitet und einem Kondenswasserablauf an dem Kältemittelverdampfer zugeführt werden kann. Die Ableitung dieses Wassers kann entweder mittels eines gesonderten Schlauches zu dem Kondenswasserablauf erfolgen oder die Ableitung bzw. Führung des Wassers von dem Filterdeckel zu dem Kondenswasserablauf ist in das Gehäuse 1 der Kraftfahrzeugklimaanlage integriert, insbesondere dann, sofern der tiefste Punkt der Wanne ausreichend hoch ist, dass ein Gefälle zu dem Kondenswasserablauf des Kältemittelverdampfers in einem ausreichenden Umfang, z. B. mit einem Gefälle zwischen 15° und 18°, besteht. Die Bodenwandung 4 des Filterdeckels 3 weist ebenfalls ein Gefälle auf, beispielsweise in Form eines Dachprofiles mit einer Neigung im Bereich von 2° bis 3°, damit sich das in der Wanne 7 sammelnde Wasser vollständig durch die Ableitungsöffnung 20 abgeleitet werden kann. Tropfnasen 16 dienen dazu, dass das Wasser, insbesondere oberhalb des Gehäuses 1 an der Nut-Feder-Verbindung 9, nicht zu der Nut-Feder-Verbindung 9 gelangt.

Abweichend zu dem in Fig. 2 und 3 dargestellten Ausführungsbeispiel weist der Filterdeckel 3 in einem weiteren nicht dargestellten Ausführungsbeispiel eine Zwischenwandung auf und der Ableitungskanal 18 mündet in einen Kanal zwischen der Zwischenwandung und der Bodenwandung 4. Das sich am Luftfilter 2 sammelnde Wasser sammelt sich oberhalb der Zwischenwandung. Damit stehen zwei getrennte Ableitungen für das sich im Ableitungskanal 18 sammelnde Wasser und das sich an dem Luftfilter 2 sammelnde Wasser zur Verfügung. Der Kanal zwischen der Zwischenwandung und der Bodenwandung mündet vorzugsweise in einen Autodockingstutzen 21.

In Fig. 4 ist der Autodockingstutzen 21 dargestellt. Der Autodockingstutzen 21 ist beispielsweise einteilig mit dem Filterdeckel 3 ausgebildet. Im Endabschnitt des Autodockingstutzens 21 weist dieser einen Dockingendabschnitt 22 auf, der parallel zu der Bewegungsrichtung 17 des Filterdeckels 3 ausgebildet ist. Komplementär zu dem Dockingabschnitt 22 ist an dem Gehäuse 1 eine Gegenöffnung 23, beispielsweise in der Form eines Gegenstutzens, vorhanden. Am Dockingendabschnitt 22 ist eine vollständig umlaufende Ringnut 24 vorhanden, in welcher eine Dichtung 25 teilweise angeordnet ist. Die Dichtung 25 kann auch als Weichkomponente (nicht dargestellt) angespritzt sein. Bei der horizontalen Bewegung des Filterdeckels 3 in der Bewegungsrichtung 17 kann somit selbsttätig eine fluiddichte Verbindung von dem Autodockingstutzen 21 zu dem Gehäuse 1 mit der Gegenöffnung 23 hergestellt werden und auch diese beim Lösen der Verbindung zwischen dem Filterdeckel 3 und dem Gehäuse 1 wieder selbsttätig gelöst werden, da lediglich der Dockingabschnitt 22 aus der Gegenöffnung 23 heraus zu bewegen ist.

Die Nut-Feder-Verbindungen 9 sind im Allgemeinen nicht wasserdicht und dienen lediglich zur mechanischen, formschlüssigen Befestigung des Filterdeckels 3 an dem Gehäuse 1. Die Nut-Feder-Verbindungen 9 sind somit entweder oberhalb des maximal möglichen Wasserspiegels des Wassers in der Wanne 7 ausgebildet oder der Filterdeckel 3 weist eine Barrierewandung 29 auf (Fig. 2), so dass dadurch kein Wasser zu der in Fig. 2 rechts dargestellten Nut-Feder-Verbindung 9 gelangt. Abweichend hiervon können die Nut-Feder-Verbindungen 9 auch wasserdicht ausgebildet sein, z. B. in 2-Komponententechnik in Hart-Weich-Ausführung. Hier übernimmt die Weichkomponente die zusätzliche Dichtwirkung (nicht dargestellt).

Insgesamt betrachtet sind mit der erfindungsgemäßen Kraftfahrzeugklimaanlage wesentliche Vorteile verbunden. Der Filterdeckel 3 kann an dem Gehäuse 1 besonders einfach mit einer im Wesentlichen horizontalen Bewegung an dem Gehäuse 1 lösbar mechanisch verbunden werden. Durch eine effektive Wasserableitung des sich an dem Luftfilter 2 sammelnden Wassers sowie einen Ableitungskanal 18, in welche Ableitungsöffnungen 28 münden, kann das sich am Luftfilter 2 sammelnde Wasser besonders gut abgeleitet werden.

### Bezugszeichenliste

- 1: Gehäuse
- 2: Luftfilter
- 3: Filterdeckel
- 4: Bodenwandung
- 5: Längsseitenwandung
- 6: Breitseitenwandung
- 7: Wanne
- 8: Einrichtung zum Ableiten von Wasser aus der Wanne
- 9: Nut-Feder-Verbindung
- 10: Feder
- 11: Rippe
- 12: A-Seite
- 13: F-Seite
- 14: Längsachse der F-Seite
- 15: Längsachse der A-Seite
- 16: Tropfnase
- 17: Bewegungsrichtung
- 18: Ableitungskanal
- 19: Ableitungsstutzen
- 20: Ableitungsöffnung in Filterdeckel
- 21: Autodockingstutzen
- 22: Dockingendabschnitt
- 23: Gegenöffnung
- 24: Ringnut in Dockingabschnitt
- 25: Dichtung in Ringnut
- 26: Luft
- 27: Wasserleiste
- 28: Ableitungsöffnung
- 29: Barrierewandung

## Patentansprüche

1. Kraftfahrzeugklimaanlage, umfassend
- ein Gehäuse (1),
- wenigstens einen Luftkanal zum Durchleiten von Luft,
- ein Gebläse,
- einen Luftfilter (2),
- einen Filterdeckel (3) mit einer Wanne (7) zum Sammeln von Wasser an dem Luftfilter (2) und vorzugsweise einer Einrichtung (8) zum Ableiten des Wassers aus der Wanne (7),
- eine Nut-Feder-Verbindung (9) zum lösbaren Verbinden des Filterdeckels (3) mit dem Gehäuse (1),
**dadurch gekennzeichnet, dass** der Filterdeckel (3) aufgrund der Geometrie der Nut-Feder-Verbindung (9) mittels einer, insbesondere ausschließlich, im Wesentlichen horizontalen translatorischen Bewegung des Filterdeckels (3) mit dem Gehäuse (1) verbindbar und lösbar ist, wobei die Nut-Feder-Verbindung (9) an einer Anschlagseite (12), vorzugsweise an zwei gegenüberliegenden Anschlagseiten (12), des Filterdeckels (3) im Wesentlichen in horizontaler Translationsrichtung ausgerichtet ist, so dass die im Wesentlichen horizontal translatorisch ausgerichtete Nut-Feder-Verbindung (9) als Anschlag bei der im Wesentlichen horizontalen Translationsbewegung des Filterdeckels (3) zum Verbinden mit dem Gehäuse (1) dient und wobei die Nut-FederVerbindung (9) an einer Führungsseite (13), vorzugsweise an zwei gegenüberliegenden Führungsseiten (13), als Führungsschiene zur Führung des Filterdeckels (3) bei der Bewegung des Filterdeckels (3) zum Verbinden und Lösen mit dem Gehäuse (1) dient.

2. Kraftfahrzeugklimaanlage nach Anspruch 1, **dadurch gekennzeichnet, dass** die Nut-Feder-Verbindung (9) an der einen Führungsseite (13), vorzugsweise an zwei Führungsseiten (13), im Wesentlichen vertikal translatorisch ausgerichtet ist.

3. Kraftfahrzeugklimaanlage nach Anspruch 1 oder 2, **dadurch gekennzeichnet, dass** eine Längsachse (14) der Nut und/oder der Feder (10) der Nut-Feder-Verbindung (9) an der einen Führungsseite (13), vorzugsweise an zwei Führungsseiten (13), im Wesentlichen parallel zu einer Bewegungsrichtung (17) der horizontal translatorischen Bewegung zum Verbinden und Lösen des Filterdeckels (3) mit dem Gehäuse (1) ausgerichtet ist.

4. Kraftfahrzeugklimaanlage nach einem oder mehreren der vorhergehenden Ansprüche, **dadurch gekennzeichnet, dass** der Luftfilter (2) auf wenigstens einer Rippe (11) aufliegt und die Rippe (11) an dem Filterdeckel (3) ausgebildet ist und vorzugsweise die wenigstens eine Rippe (11) im Wesentlichen senkrecht zu einer Strömungsrichtung der durch den Luftfilter (2) geleiteten Luft ausgerichtet ist, so dass die wenigstens eine Rippe (11) als Luftdichtung und/oder Labyrinthdichtung zur Vermeidung einer Umströmung des Luftfilters (2) mit Luft fungiert.

5. Kraftfahrzeugklimaanlage nach einem oder mehreren der vorhergehenden Ansprüche, **dadurch gekennzeichnet, dass** die Kraftfahrzeugklimaanlage einen Ableitungskanal (18) zur Ableitung von Wasser in einem zu dem Luftfilter (2) führenden Luftkanal aufweist.

6. Kraftfahrzeugklimaanlage nach Anspruch 5, **dadurch gekennzeichnet, dass** der Ableitungskanal (18) an dem Gehäuse (1) der Kraftfahrzeugklimaanlage oder an dem Filterdeckel (3) ausgebildet ist und vorzugsweise der Ableitungskanal (18) bei einer Ausbildung an dem Filterdeckel (3) in die Einrichtung (8) zum Ableiten des Wassers aus der Wanne (7) mündet.

7. Kraftfahrzeugklimaanlage nach einem oder mehreren der vorhergehenden Ansprüche, **dadurch gekennzeichnet, dass** der Filterdeckel (3) einen Autodockingstutzen (21) umfasst zum Ableiten des Wassers aus der Wanne (7) und der Autodockingstutzen (21) an einem Dockingendabschnitt (22) im Wesentlichen parallel zu der Bewegungsrichtung (17) des Filterdeckels (3) zum Verbinden und Lösen mit dem Gehäuse (1) ausgerichtet ist, so dass durch eine komplementär ausgebildeten Gegenöffnung (23) an dem Gehäuse (1) beim Bewegen des Filterdeckels (3) selbständig eine fluidleitende Verbindung von dem Autodockingstutzen (21) zu der Gegenöffnung (23) an dem Gehäuse (1) herstellbar und aufhebbar ist.

8. Kraftfahrzeugklimaanlage nach einem oder mehreren der vorhergehenden Ansprüche, **dadurch gekennzeichnet, dass** die Kraftfahrzeugklimaanlage ein Gebläse und/oder eine Heizeinrichtung und/oder einen Kältemittelverdampfer und/oder einen Kondenswasserablauf zum Ableiten von Kondenswasser an dem Kältemittelverdampfer umfasst und/oder die Einrichtung (8) zum Ableiten des Wassers aus der Wanne (7) in den Kondenswasserablauf an dem Kältemittelverdampfer mündet.

## Claims

1. A vehicle air-conditioning system, comprising
- a housing (1),
- at least one air channel for the passage of air,
- a fan,
- an air filter (2),
- a filter cover (3) with a tub (7) for collecting water on the air filter (2) and preferably an arrangement (8) for draining the water out of the tub (7),
- a groove-spring connection (9) for the releasable connection of the filter cover (3) and the housing (1),
**characterised in that** due to the geometry of the groove-spring connection (9), the filter cover (3) can be connected to the housing (1) and released therefrom, in particular exclusively, by means of a substantially horizontal translational movement of the filter cover (3), wherein the groove-spring connection (9) is arranged on a stop side (12), preferably on two opposite stop sides (12) of the filter cover (3), substantially in a horizontal translational direction, so that the groove-spring connection (9), which is substantially oriented in a horizontal translational manner, serves as stop during the substantially horizontal translational movement of the filter cover (3) for the connection to the housing (1) and wherein the groove-spring connection (9), on one guidance side (13), preferably on two opposite guidance sides (13), serves as guidance rail for guiding the filter cover (3) during the movement of the filter cover (3) in order to connect it to the housing (1) and release it therefrom.

2. The vehicle air-conditioning system according to claim 1, **characterised in that** the groove-spring connection (9) is oriented in a substantially vertical translational manner on the one guidance side (13), preferably on two guidance sides (13).

3. The vehicle air-conditioning system according to claim 1 or 2, **characterised in that**, on the one guidance side (13), preferably on two guidance sides (13), the orientation of a longitudinal axis (14) of the groove and/or of the spring (10) of the groove-spring connection (9) is substantially parallel to a movement direction (17) of the horizontal translational movement for the connection of the filter cover (3) to the housing (1) and the release therefrom.

4. The vehicle air-conditioning system according to one or more of the preceding claims, **characterised in that** the air filter (2) rests on at least one rib (11) and the rib (11) is formed on the filter cover (3) and the at least one rib (11) is preferably substantially perpendicular to a flow direction of the air guided through the air filter (2), so that the at least one rib (11) acts as air seal and/or labyrinth seal in order to avoid air flowing around the air filter (2).

5. The vehicle air-conditioning system according to one or more of the preceding claims, **characterised in that** the vehicle air-conditioning system has a drainage channel (18) for draining water into an air channel leading to the air filter (2).

6. The vehicle air-conditioning system according to claim 5, **characterised in that** the drainage channel (18) is formed on the housing (1) of the vehicle air-conditioning system or on the filter cover (3) and the drainage channel (18), when formed on the filter cover (3), preferably ends in the arrangement (8) for draining the water out of the tub (7).

7. The vehicle air-conditioning system according to one or more of the preceding claims, **characterised in that** the filter cover (3) comprises an auto docking nozzle (21) for draining the water out of the tub (7) and the auto docking nozzle (21) is oriented on a docking end section (22) substantially parallel to the movement direction (17) of the filter cover (3) for the connection to the housing (1) and the release therefrom, so that, when moving the filter cover (3), a fluid-conducting connection of the auto docking nozzle (21) to the counter-opening (23) on the housing (1) is producible and releasable in an independent manner by a complementary oriented counter-opening (23) on the housing (1).

8. The vehicle air-conditioning system according to one or more of the preceding claims, **characterised in that** the vehicle air-conditioning system comprises a fan and/or a heating arrangement and/or a refrigerant evaporator and/or a condensation water outlet for draining condensation water on the refrigerant evaporator and/or the arrangement (8) for draining the water out of the tub (7) ends in the condensation water outlet on the refrigerant evaporator.

## Revendications

1. Système de climatisation d'un véhicule automobile, comprenant
- un carter (1),
- au moins un conduit d'air servant à la circulation d'air,
- un ventilateur,
- un filtre à air (2),
- un couvercle de filtre (3) comprenant une cuve (7) servant à accumuler de l'eau au niveau du filtre à air (2), et comprenant de préférence un dispositif (8) servant à évacuer l'eau de la cuve (7),
- un assemblage à rainure et languette (9) prévu pour l'assemblage - détachable - du couvercle de filtre (3) avec le carter (1),
**caractérisé en ce que** le couvercle de filtre (3), en raison de la géométrie de l'assemblage à rainure et languette (9), peut être assemblé avec le carter (1) et détaché de celui-ci, au moyen, en particulier exclusivement, d'un mouvement de translation du couvercle de filtre (3), ledit mouvement se produisant pratiquement de manière horizontale, où l'assemblage à rainure et languette (9) réalisé au niveau d'un côté de butée (12), de préférence au niveau de deux côtés de butée opposés (12) du couvercle de filtre (3), est orienté pratiquement suivant une direction de translation horizontale, de sorte que l'assemblage à rainure et languette (9), orienté en translation pratiquement de manière horizontale, sert, pour l'assemblage avec le carter (1), de butée lors du mouvement de translation du couvercle de filtre (3) se produisant pratiquement de manière horizontale, et où l'assemblage à rainure et languette (9) réalisé au niveau d'un côté de guidage (13), de préférence au niveau de deux côtés de guidage opposés (13), sert, pour l'assemblage avec le carter (1) et pour le détachement de celui-ci, de rail de guidage pour le guidage du couvercle de filtre (3) lors du mouvement du couvercle de filtre (3).

2. Système de climatisation d'un véhicule automobile selon la revendication 1, **caractérisé en ce que** l'assemblage à rainure et languette (9) réalisé au niveau de l'un des côtés de guidage (13), de préférence au niveau de deux côtés de guidage (13), est orienté en translation pratiquement de manière verticale.

3. Système de climatisation d'un véhicule automobile selon la revendication 1 ou 2, **caractérisé en ce qu'**un axe longitudinal (14) de la rainure et / ou de la languette (10) de l'assemblage à rainure et languette (9) réalisé au niveau de l'un des côtés de guidage (13), de préférence au niveau de deux côtés de guidage (13), est orienté, pour l'assemblage et le détachement du couvercle de filtre (3), avec le carter (1), pratiquement de manière parallèle à une direction de mouvement (17) du mouvement de translation se produisant horizontalement.

4. Système de climatisation d'un véhicule automobile selon l'une quelconque ou plusieurs des revendications précédentes, **caractérisé en ce que** le filtre à air (2) est en appui sur au moins une nervure (11), et la nervure (11) est configurée sur le couvercle de filtre (3) et, de préférence, la nervure (11) au moins au nombre de un est orientée pratiquement de manière perpendiculaire à une direction d'écoulement de l'air dirigé à travers le filtre à air (2), de sorte que la nervure (11) au moins au nombre de un fait fonction de joint d'étanchéité à l'air et / ou de joint à labyrinthe pour éviter que de l'air s'écoule autour du filtre à air (2).

5. Système de climatisation d'un véhicule automobile selon l'une quelconque ou plusieurs des revendications précédentes, **caractérisé en ce que** le système de climatisation du véhicule automobile présente un conduit d'évacuation (18) servant à l'évacuation d'eau dans un conduit d'air menant au filtre à air (2).

6. Système de climatisation d'un véhicule automobile selon la revendication 5, **caractérisé en ce que** le conduit d'évacuation (18) est configuré sur le carter (1) du système de climatisation du véhicule automobile ou bien sur le couvercle de filtre (3) et, de préférence, le conduit d'évacuation (18), dans le cas d'une configuration sur le couvercle de filtre (3), débouche dans le dispositif (8) servant à évacuer l'eau de la cuve (7).

7. Système de climatisation d'un véhicule automobile selon l'une quelconque ou plusieurs des revendications précédentes, **caractérisé en ce que** le couvercle de filtre (3) comprend une tubulure d'autocouplage (21) servant à évacuer l'eau de la cuve (7), et la tubulure d'autocouplage (21), au niveau d'une partie d'extrémité de couplage (22), est orientée, pour l'assemblage avec le carter (1) et pour le détachement de celui-ci, pratiquement de manière parallèle à la direction de mouvement (17) du couvercle de filtre (3), de sorte que, grâce à une ouverture opposée (23) configurée de façon complémentaire sur le carter (1), une communication de fluide, depuis la tubulure d'autocouplage (21) jusqu'à l'ouverture opposée (23) formée sur le carter (1), qui se produit automatiquement lors du mouvement du couvercle de filtre (3), peut être réalisée et supprimée.

8. Système de climatisation d'un véhicule automobile selon l'une quelconque ou plusieurs des revendications précédentes, **caractérisé en ce que** le système de climatisation du véhicule automobile comprend un ventilateur et / ou un dispositif de chauffage et / ou un évaporateur de fluide frigorigène et / ou une sortie d'eau de condensation servant à l'évacuation d'eau de condensation au niveau de l'évaporateur de fluide frigorigène et / ou le dispositif (8) servant à l'évacuation de l'eau provenant de la cuve (7) débouche dans la sortie d'eau de condensation prévue au niveau de l'évaporateur de fluide frigorigène.
